# EUROPEAN PATENT SPECIFICATION

(11) **EP 2 000 334 B1**
(45) Date of publication and mention of the grant of the patent: **08.10.2014**
(21) Application number: 07109756.2
(22) Date of filing: 06.06.2007
(51) Int. Cl.: B60C 25/04

(54) **Slide pad**
Gleitauflage
Tampon coulissant

(43) Date of publication of application: 10.12.2008
(73) Proprietor: Vetys Lizenz-Verwaltungs GmbH, 50825 Köln (DE)
(72) Inventor: Döring, Frank, 50226, Frechen (DE)
(74) Representative: Lenzing Gerber Stute

(56) References cited:
- US-A- 2 421 856
- US-A- 2 661 793

## Description

This invention relates to a slide pad (1) for aligning a tyre on a rim and a method for using this slide pad (1).

It is well known from prior art to use different means for aligning the gap between the back side of the bead part (3) of the tyre and the end of the rim edge wall (2).

A constant gap is necessary for minimizing side force variations from the tyre under rolling conditions. Less variations in the side force results in a better performance under less vibrations of the wheel and the car.

This is a very important feature with respect to safety and comfort of all cars, especially high-performance or racing cars.

This uneven gap can be found by all processes of tyre mounting. In many cases the bead part (4) overrides the hump of the rim (14).

In the prior art there could be found some solutions for minimizing the gap around the rim (14):
From the past it is known to insert material between tyre (5) and rim (14) to fill out the gap in between. The major disadvantage is that it is very difficult to get appropriate thickness of the material before it is inserted. The process is more a trial and error than a predetermined alignment method.

US 5 339 880 describes an apparatus for fitting bead portions of the tyre onto a wheel substantially uniformly and at the same time for filling inner pressure into the tyre.

One disadvantage of this solution is that the alignment process takes much time preventing a fast movement from the inner part of the rim (14) over the hump and the resulting alignment of the tyre is due to the geometry of the guide ring not completely uniform to the rim edge (2) wall. Variations of side forces remain after this alignment process.

One disadvantage of this apparatus is that the application needs much experience of the operator and that often the bead seat is moved over the hump with the additional need of refitting of tyre. Furthermore, small variations of side forces remain after this alignment process.

All means of the prior art do not solve the uneven gap completely, many of these means perform a movement of the bead part of the tyre with a rotation about the bead wire.

The object of the present invention is to give a simple mean for adjusting a tyre on a rim (14) with fewer variations in the side forces of the tyre under rolling conditions than known from the prior art. The device according to this inventions should give reproducible results without the need of a skilled operator. The duration of an alignment process using the device according to this invention should be shorter than those of the prior art.

The task is accomplished in accordance with the invention by a slide pad (1) for aligning a constant distance between the rim edge wall (2) and the back side (3) of the bead part (4) of a tyre (5), wherein the slide pad (1) has a length of at least 50 mm, a height between 1 and 15 mm and a thickness between 2 and 9 mm, wherein one of the surface of the slide pad (1) being defined by the length and the thickness of the slide pad defines the lower side (6), the other rear (opposed) surface of the slide pad (1) being defined by the length and the thickness of the slide pad defines the upper side (7), one of the surface of the slide pad (1) being defined by the height and the thickness of the slide pad (1) defines the insertion front (8), the other rear (opposed) surface of the slide pad (1) being defined by the height and the thickness of the slide pad (1) defines the insertion end (9), and wherein the upper side (7) of the insertion front (8) of the slide pad (1) has a smaller thickness than the lower side (6) of the insertion front.

This slide pad (1) has the major advantage that it is a simple device for adjusting the bead part (4) of a tyre precisely on a rim without moving the bead part (4) over the hump of the rim (14). The use of this slide pad (1) more effectively leads to a constant gap between the bead part (4) and the outer wall of the rim (14). This resulting matching of the bead structure is the key knowledge to provide an optimized way to the market providing an optimal tyre setup, especially in the formula one and for sports cars, reducing vibrations resulting from an incorrect adjustment of the bead part (4) on the tyre (5).
The improvement when using the slide pad (1) according to the invention is a higher precision tyre mount work in a shorter time compared with the tools and principles of the prior art.

The thickness of the slide pad (1) is important and increases from the insertion-edge- part to the end of the tip-part. This structure avoids the instability of positioning due to the return of bead part (4) caused by elasticity of rubber.
A preferred embodiment of the slide pad according to the invention has a length between 110 and 150 mm. The slide pad (1) could have a height between 2 and 5 mm and/or a thickness between 3 and 5 mm.

Another preferred embodiment of the invention relates to a slide pad (1) having a thickness at the insertion end (9) which is between 2 and 8 times thicker than the thickness of the insertion front (8).

In accordance with a further, similarly preferred embodiment of this application, the thickness of the slide pad (1) at the insertion end (9) is 6 mm and the thickness of the insertion front (8) is 1 mm.

The present invention preferably also relates to a slide pad (1) which comprises further a wedge angle between the height at the insertion front (8) and the height at the insertion end (9) of 1 to 5 degrees.

In order to accomplish its objective, the present invention further relates to a slide pad (1) which comprises further a friction reducing matter. This friction reducing matter could comprise a small dimple, roller and/or ball. The size of the small dimple could be less than 2 mm in diameter and less than 1 mm in depth. It is also possible to use friction reducing matter comprising a coating containing friction reducing particles (PTFE, MoS₂).

If the friction of the tyre (5) and the slide pad (1) according to this invention, the friction reducing matter provides an efficient and simple way leading to a perfect alignment and tyre/rim-setup.
The size of the small dimple of less than 2 mm in diameter and less than 1 mm in depth are put on the contact side to the tyre rubber, considering the characteristic of the rubber to lower the contact pressure in a best mode.

In a similarly preferred embodiment of the slide pad (1) under the invention, the slide pad (1) comprises further a bracket which is located at the upper side (7) of the slide pad (1) between the insertion front (8) and the insertion end (9). This slide pad (1) could comprise further fixing means (12) for attaching the slide pad (1) to an adjusting machine. In this embodiment, an automatically adjusting of many tyres is provided.

Furthermore, the invention relates to a process for aligning a bead part (4) of a tyre (5) on the rim (14) with a slide pad (1) wherein
- in a first step the slide pad (1) is placed above the outer circumference end (15) of the rim (14) and puts sufficient pressure on the outer side wall (16) of the rotating tyre (5) in such a way that the back side (3) of the bead part (4) of the tyre (5) is moved away from the outmost outer circumference end of the rim edge wall (2),
- in a second step the slide pad (1) is pivoted and directed in such a way that it slides between the outer side wall (16) of the tyre (5) and the inner wall (17) of the rim edge wall (2), and
- in a third step the slide pad (1) is pivoted and directed in such a way that it puts pressure on the back side of the bead part (3) primarily directed parallel to the bead seating area (18) of the rim (14) in direction to the bead toe (19) so that the bead sole (20) is moved towards the hump (21) performing an axial movement.

This process ensures that the bead sole (20) of the tyre (5) is not moved over the hump (21) but it is only directed towards the hump (21), i.e. that the inner end of the bead sole (20), the bead toe (19), matches with the outer end of the hump (21).

The following descriptions of the figures and schematic explain the invention, without in any way restricting the invention to them.

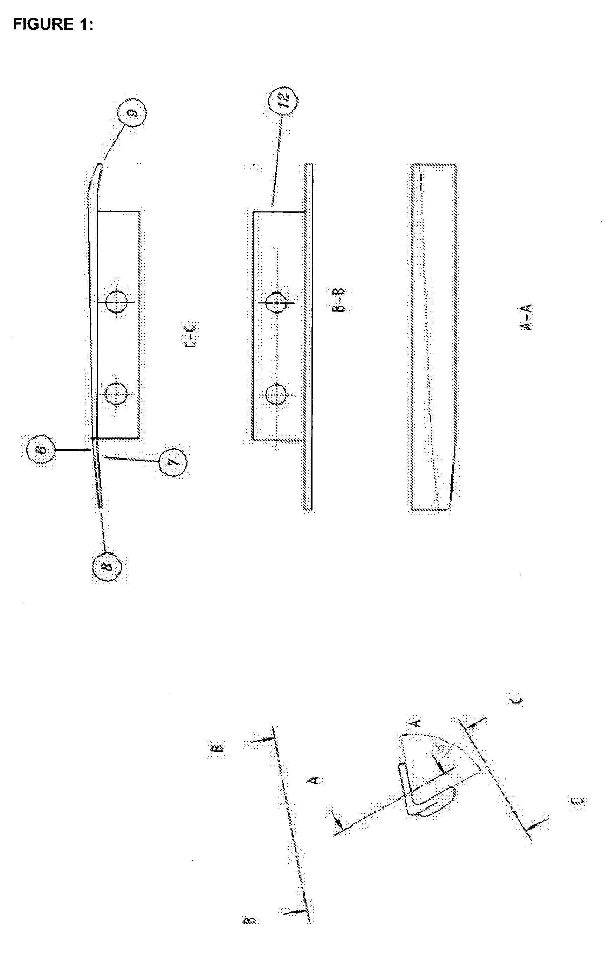

Figure 1 shows a slide pad in accordance with the invention in three different perspectives and a sectional drawing.

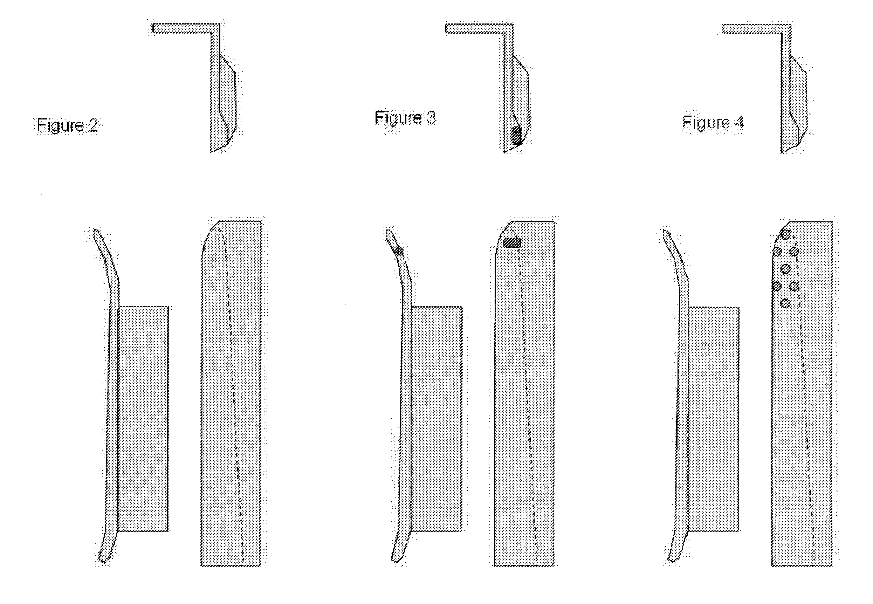

Figures 2 - 3 show various forms of slide pads according to this invention: Figure 3 shows a slide pad with a roller as a sliding element to reduce friction during use. Figure 4 shows a slide pad with several balls as a sliding elements to reduce friction during insertion. Figure 2 is a slide pad without any special friction reducing means.

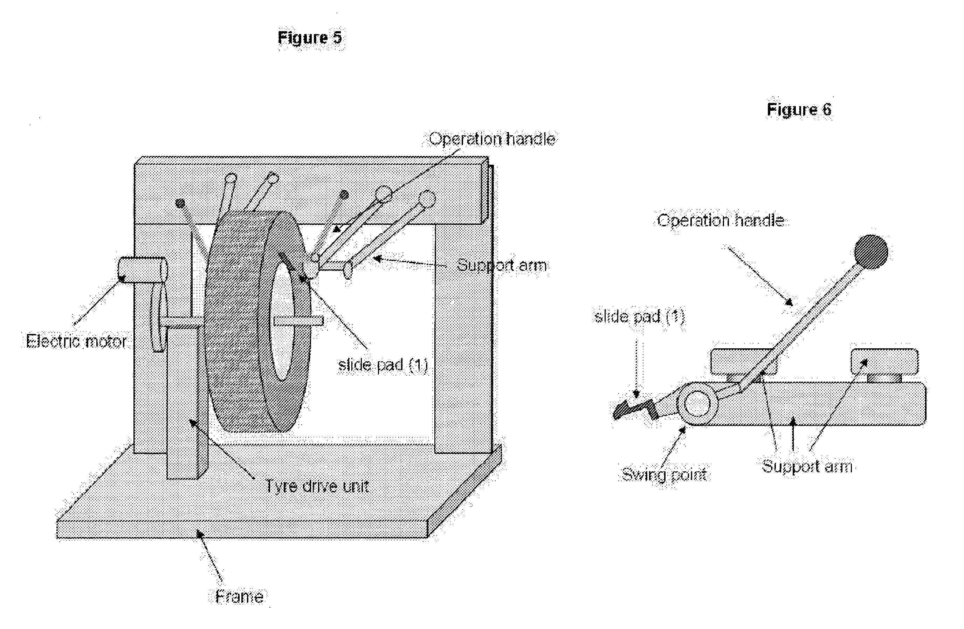

Figure 5 shows an adjusting machine with a slide pad (1) mounted and Figure 6 shows details of the operation handle of this adjusting machine. It shows a frame which supports the electric motor driving the tyre (5), a tyre drive unit which supports the tyre (5) in rotation, and a support arm which supports the slide pad (5). The support arm part can be driven by an electrical or oil pressure driven motor.
Figures 7.1 - 7.3 show the use of the slide pad (1) mounted on the operation handle of the adjusting machine of figure 5:

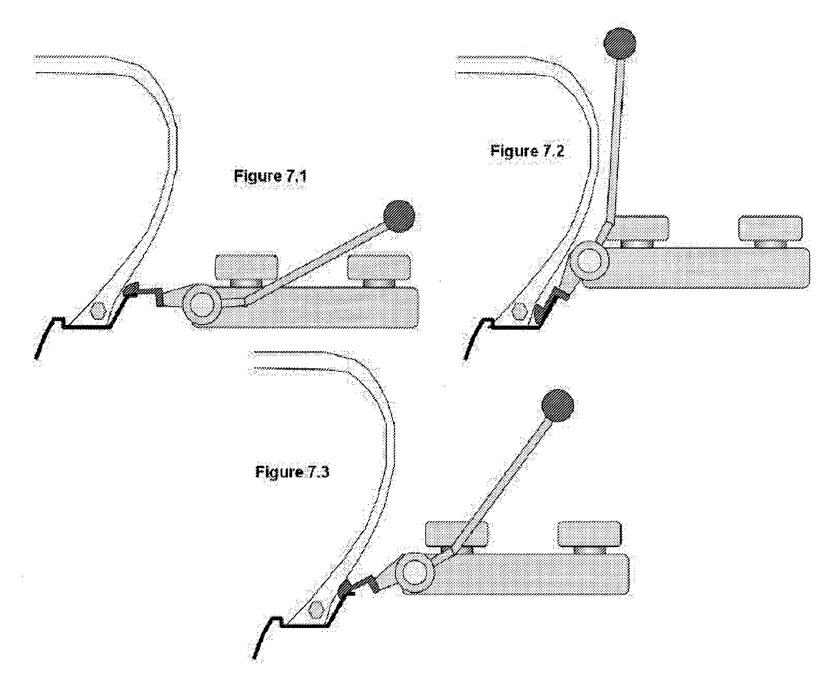

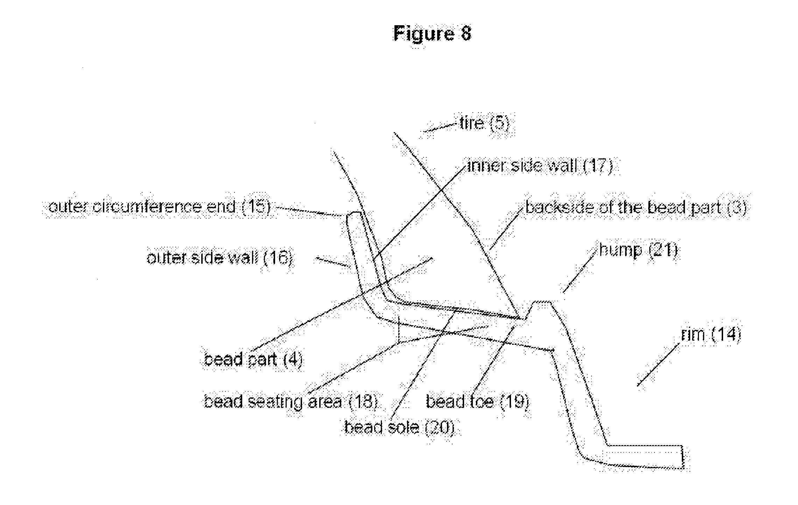

   Figure 7.1 shows the beginning of the adjustment process with a sectional view of the tyre (5) and the rim (14). Figure 7.2 shows the actual adjustment process and Figure 7.3 shows the end of the adjustment process.
The slide pad (1) according to the present invention is installed to be turnable around the swing point and it supports an easy movement to insert it between the end of a rim (14) and the tyre part bead.

### List of Reference Numbers:

- (1): slide pad
- (2): rim edge wall
- (3): back side of the bead part
- (4): bead part
- (5): tyre
- (6): lower side
- (7): upper side
- (8): insertion front
- (9): insertion end
- (10): friction reducing matter
- (11): bracket
- (12): fixing means
- (13): adjusting machine
- (14): rim
- (15): outer circumference end
- (16): outer side wall
- (17): inner side wall
- (18): bead seating area
- (19): bead toe
- (20): bead sole
- (21): hump

## Claims

1. A slide pad (1) for aligning a constant distance between the rim edge wall and the back side (3) of the bead part (4) of a tyre (5), **characterized in that**
a) it has a length of at least 50 mm,
b) it has a height between 1 and 15 mm,
c) it has a thickness between 2 and 9 mm,
d) one of the surface built by the length and the thickness of the slide pad (1) defines the lower side (6),
e) the surface other than d) built by the length and the thickness of the slide pad (1) defines the upper side (7); surface e) is opposed to surface d),
f) one of the surface built by the height and the thickness of the slide pad (1) defines the Insertion front (8),
g) the surface other than f) built by the height and the thickness of the slide pad (1) defines the insertion end (9); surface g) is opposed to surface f),
and **in that** the upper side (7) of the insertion front (8) of the slide pad (1) has a smaller thickness than the lower side (6) of the Insertion front (8).

2. A slide pad (1) according to claim 1, **characterised in that** it has a length between 110 and 150 mm.

3. A slide pad (1) according to claim 1 or 2, **characterised in that** it has a height between 2 and 5 mm.

4. A slide pad (1) according to one of the preceding claims, **characterised in that** it has a thickness between 3 and 5 mm.

5. A slide pad (1) according to claim 1, **characterised in that** the thickness of the slide pad (1) at the insertion end (9) is between 2 and 8 times thicker than the thickness of the insertion front (8).

6. A slide pad (1) according to one of the preceding claims, **characterised in that** it comprises further a wedge angle between the height at the insertion front (8) and the height at the insertion end (9) of 1 to 5 degrees.

7. A slide pad (1) according to one of the preceding claims, **characterised in that** it comprises further a friction reducing matter (10).

8. A slide pad (1) according to claim 7 **characterised in that** the friction reducing matter (10) comprises a small dimple, roller and/or ball.

9. A slide pad (1) according to claim 8, **characterised in that** the size of the small dimple is less than 2 mm in diameter and less than 1 mm in depth.

10. A slide pad (1) according to claim 7, **characterised in that** the friction reducing matter (10) comprises a coating containing friction reducing particles (PTFE, MoS₂).

11. A slide pad (1) according to one of the preceding claims, **characterised in that** it comprises further a bracket (11) which is located at the upper side (7) of the slide pad (1) between the insertion front (8) and the insertion end (9).

12. A slide pad (1) according to claim 11, **characterised in that** it comprises further fixing means (12) for attaching the slide pad (1) to an adjusting machine (13).

13. A process for aligning a bead part (4) of a tyre (5) on the bead seating area (18) between the inner side wall (17) and the hump (21) of a rim (14) with a slide pad (1) according to one of the preceding claims, **characterised in that**
• in a first step the slide pad (1) is placed above the outer circumference end (15) of the rim (14) and puts sufficient pressure on the outer side wall of the rotating tyre (5) in such a way that the back side (3) of the bead part (4) of the tyre (5) is moved away from the outmost outer circumference end of the rim edge wall (2),
• in a second step the slide pad (1) is pivoted and directed in such a way that it slides between the outer side wall of the tyre (5) and the inner wall (17) of the rim edge wall (2), and
• in a third step the slide pad (1) is pivoted and directed in such a way that it puts pressure on the back side of the bead part (3) primarily directed parallel to the bead seating area (18) of the rim (14) in direction to the bead toe (19) so that the bead sole (20) is moved towards the hump (21) performing an axial movement.

## Patentansprüche

1. Ein Gleitstück (2) zum Ausrichten eines konstanten Abstandes zwischen der Felgenhornwand und Rückseite (3) eines Wulstteils (4) eine Reifens (5), **dadurch gekennzeichnet, dass**
a) es eine Länge von mindestens 50 mm hat,
b) es eine Höhe zwischen 1 und 15 mm hat,
c) es eine Dicke zwischen 2 und 9 mm hat,
d) eine der Oberflächen, die durch die Länge und die Dicke des Gleitstücks (1) gebildet ist, eine Unterseite (6) definiert,
e) die von d) verschiedene Oberfläche, die durch die Länge und die Dicke des Gleitstücks (1) gebildet ist, die Oberseite (7) definiert; Oberfläche e) liegt der Oberfläche d) gegenüber,
f) eine der Oberflächen, die durch die Höhe und die Dicke des Gleitstücks (1) gebildet ist, eine Einsteckvorderseite (8) definiert,
g) die von f) verschiedene Oberfläche, die durch die Höhe und die Dicke des Gleitstücks (1) gebildet ist, das Einsteckende (9) definiert; die Oberfläche g) liegt der Oberfläche f) gegenüber,
und dadurch, dass die Oberseite (7) der Einsteckvorderseite (8) des Gleitstücks (1) eine geringere Dicke als die untere Seite (6) der Einsteckvorderseite (8) aufweist.

2. Ein Gleitstück (1) gemäß Anspruch 1, **dadurch gekennzeichnet, dass** es eine Länge zwischen 110 und 150 hat.

3. Ein Gleitstück (1) gemäß Anspruch 1 oder 2, **dadurch gekennzeichnet, dass** es eine Höhe zwischen 2 und 5 mm hat.

4. Ein Gleitstück (1) nach einem der vorstehenden Ansprüche, **dadurch gekennzeichnet, dass** es eine Dicke zwischen 3 und 5 mm hat.

5. Ein Gleitstück (1) gemäß Anspruch 1, **dadurch gekennzeichnet, dass** die Dicke des Gleitstücks (1) am Einsteckende (9) zwischen 2 und 8 mal dicker als die Dicke der Einsteckvorderseite (8) ist.

6. Ein Gleitstück (1) gemäß einem der vorstehenden Ansprüche, **dadurch gekennzeichnet, dass** es zusätzlich einen Keilwinkel zwischen der Höhe der Einsteckvorderseite (8) und der Höhe des Einsteckendes (9) von 1 bis 5° aufweist.

7. Ein Gleitstück (1) nach einem der vorstehenden Ansprüche, **dadurch gekennzeichnet, dass** es zusätzlich ein Reibung reduzierendes Material (10) aufweist.

8. Ein Gleitstück (1) gemäß Anspruch 7, **dadurch gekennzeichnet, dass** das Reibung reduzierende Material (10) ein kleines Grübchen, Walze und/oder Kugel ist.

9. Ein Gleitstück (1) gemäß Anspruch 8, **dadurch gekennzeichnet, dass** die Größe der kleinen Grübchen kleiner als 2 mm im Durchmesser und kleiner als 1 mm in der Tiefe ist.

10. Ein Gleitstück (1) gemäß Anspruch 7, **dadurch gekennzeichnet, dass** das Reibung reduzierende Material (10) eine Beschichtung mit Reibung reduzierenden Partikeln (PTFE, MoS₂) aufweist.

11. Ein Gleitstück (1) gemäß einem der vorstehenden Ansprüche, **dadurch gekennzeichnet, dass** es zusätzlich ein Halteblech aufweist, das an der oberen Seite (7) des Gleitstücks (1) zwischen der Einsteckvorderseite (8) und dem Einsteckende (9) angeordnet ist.

12. Ein Gleitstück (1) gemäß Anspruch 11, **dadurch gekennzeichnet, dass** es außerdem Befestigungsmittel (12) zur Befestigung des Gleitstücks (1) an eine Justiermaschine aufweist

13. Ein Verfahren zum Ausrichten eines Wulstteils (4) eines Reifens (5) auf dem Wulstsitzbereich (18) zwischen der inneren Seitenwand (17) und dem Hump (21) einer Felge (14) mit einem Gleitstück (1) gemäß einem der vorstehenden Ansprüche, **dadurch gekennzeichnet, dass**
• in einem ersten Schritt das Gleitstück (1) oberhalb des äußeren umlaufenden Endes (15) der Felge (14) positioniert wird und einen ausreichenden Druck auf die äußere Seitenwand des rotierenden Reifens (5) derart ausübt, dass die Rückwand (3) des Wulstteils (4) des Reifens (5) von dem äußersten Ende des äußeren Umfangs der Felgenhornwand (2) abgerückt wird,
• in einem zweiten Schritt das Gleitstück (1) verschwenkt und so in eine Richtung bewegt wird, dass es zwischen die äußere Seitenwand des Reifens (5) und die innere Wand (17) der Felgenhornwand (2) hinein gleitet, und
• in einem dritten Schritt das Gleitstück (1) verschwenkt und so in eine Richtung bewegt wird, dass es einen Druck auf die Rückseite des Wulstteils (3) ausübt, der hauptsächlich parallel zum Wulstsitzbereich (18) der Felge (14) in Richtung zur Wulstzehe (19) gerichtet ist, so dass die Wulstsohle (20) in Richtung zum Hump (21) bewegt wird und dabei eine axiale Bewegung ausübt.

## Revendications

1. Tampon coulissant (1) destiné à aligner une distance constante entre la paroi de flanc de jante et le côté arrière (3) de la partie de talon (4) d'un pneumatique (5), **caractérisé en ce que**
a) il a une longueur d'au moins 50 mm,
b) il a une hauteur entre 1 et 15 mm,
c) il a une épaisseur entre 2 et 9 mm,
d) une première surface construite par la longueur et l'épaisseur du tampon coulissant(1) définit le côté inférieur (6),
e) une surface différente de d) construite par la longueur et l'épaisseur du tampon coulissant (1) définit le côté supérieur (7), la surface e) est opposée à la surface d),
f) une première surface construite par la hauteur et l'épaisseur du tampon coulissant (1) définit l'avant d'insertion (8),
g) une surface différente de f) construite par la hauteur et l'épaisseur du tampon coulissant (1) définit l'extrémité d'insertion (9), la surface g) est opposée à la surface f),
et **en ce que** le côté supérieur (7) de l'avant d'insertion (8) du tampon coulissant (1) présente une plus petite épaisseur que le côté inférieur (6) de l'avant d'insertion (8).

2. Tampon coulissant (1) selon la revendication 1, **caractérisé en ce qu'**il a une longueur entre 110 et 150 mm.

3. Tampon coulissant (1) selon la revendication 1 ou 2, **caractérisé en ce qu'**il a une hauteur entre 2 et 5 mm.

4. Tampon coulissant (1) selon l'une quelconque des revendications précédentes, **caractérisé en ce qu'**il a une épaisseur entre 3 et 5 mm.

5. Tampon coulissant (1) selon la revendication 1, **caractérisé en ce que** l'épaisseur du tampon coulissant (1) au niveau de l'extrémité d'insertion (9) est entre 2 et 8 fois plus épaisse que l'épaisseur de l'avant d'insertion (8).

6. Tampon coulissant (1) selon l'une quelconque des revendications précédentes, **caractérisé en ce qu'**il comprend en outre un angle de coin entre la hauteur au niveau de l'avant d'insertion (8) et la hauteur au niveau de l'extrémité d'insertion (9) de 1 à 5 degrés.

7. Tampon coulissant (1) selon l'une quelconque des revendications précédentes, **caractérisé en ce qu'**il comprend en outre un élément de réduction du frottement (10).

8. Tampon coulissant (1) selon la revendication 7 **caractérisé en ce que** l'élément de réduction du frottement (10) comprend une petite dépression, un rouleau et/ou une bille.

9. Tampon coulissant (1) selon la revendication 8, **caractérisé en ce que** la dimension de la petite dépression est inférieure à 2 mm de diamètre et inférieure à 1 mm de profondeur.

10. Tampon coulissant (1) selon la revendication 7, **caractérisé en ce que** l'élément de réduction du frottement (10) comprend un revêtement contenant des particules de réduction du frottement (PTFE, MoS₂).

11. Tampon coulissant (1) selon l'une des revendications précédentes, **caractérisé en ce qu'**il comprend en outre un support (11) qui est situé au niveau du côté supérieur (7) du tampon coulissant (1) entre l'avant d'insertion (8) et l'extrémité d'insertion (9).

12. Tampon coulissant (1) selon la revendication 11, **caractérisé en ce qu'**il comprend en outre un moyen de fixation (12) destiné à monter le tampon coulissant (1) sur une machine de réglage (13).

13. Procédé d'alignement d'une partie de talon (4) d'un pneumatique (5) sur la zone d'appui de talon (18) entre la paroi latérale intérieure (17) et le bourrelet (21) d'une jante (14) avec un tampon coulissant (1) selon l'une des revendications précédentes, **caractérisé en ce que**
• dans une première étape le tampon coulissant (1) est placé au-dessus de l'extrémité circonférentielle extérieure (15) de la jante (14) et applique une pression suffisante sur la paroi latérale extérieure du pneumatique en rotation (5) de sorte que le côté arrière (3) de la partie de talon (4) du pneumatique (5) soit écarté de l'extrémité circonférentielle extérieure la plus à l'extérieur de la paroi de flanc de jante (2),
• dans une deuxième étape le tampon coulissant (1) est amené à pivoter et est dirigé de sorte qu'il coulisse entre la paroi latérale extérieure du pneumatique (5) et la paroi intérieure (17) de la paroi de flanc de jante (2), et
• dans une troisième étape le tampon coulissant (1) est amené à pivoter et est dirigé de sorte qu'il applique une pression sur le côté arrière de la partie de talon (3) principalement dirigée parallèlement à la surface d'appui de talon (18) de la jante (14) en direction de la pointe de talon (19) de sorte que la semelle de talon (20) soit déplacée vers le bourrelet (21) en réalisant un mouvement axial.
